# EUROPEAN PATENT APPLICATION

(11) **EP 4 755 733 A1**
(43) Date of publication of application: **10.06.2026**
(21) Application number: 25213633.8
(22) Date of filing: 05.11.2025
(51) Int. Cl.: B60S 3/04, B08B 3/02

(54) **WHEEL WASHING SYSTEM AND METHOD THEREOF**

(30) Priority: 06.12.2024 SE 2430643
(71) Applicant: Hedson Technologies AB, 232 37 Arlöv (SE)
(72) Inventor: Norman, Christian, 244 66 Furlund (SE); Thusberg, Henry, 27532 Sjöbo (SE)
(74) Representative: Basck Limited

(57) **Abstract**

A method for rinsing a wheel, the method comprising: retrieving (410) used fluids through a fluid retrieval arrangement (110), performing a preliminary rinse (420) by spraying the retrieved fluids, and subsequently performing a main rinse (430) using clean fluids.

## Description

### TECHNICAL FIELD

The present disclosure relates to water recycling, specifically the present disclosure relates to water recycling in wheel washing systems.

### BACKGROUND

Generally, wheel cleaning arrangements are present in automobile washing facilities. The wheels of a vehicle are commonly washed and cleaned for (i) smooth functioning of the vehicle and (ii) before the wheels are stored for future usages, such as while storing winter wheels, that are being replaced with summer wheels in a vehicle (car). Usually, in the conventional wheel cleaning arrangements, the wheels are washed using water (including various types of cleaning agents, chemical and/or physical such as granules such as plastic) or a water spray for flushing out the contaminants (such as particles from the car brakes, sand and salt from the road, particles released from the road surfacing and the like).

However, such conventional wheel cleaning arrangements encounter multiple technical problems. One such problem with conventional wheel cleaning arrangements is that after a wheel has been washed it is still covered with dirt and other particles and not ready to leave the wheel washing arrangement 102. Therefore, traditionally a rinse with clean water is made in order to spray off all the residual plastic granules and loose dirt that is still on the wheel. However, this uses a lot of clean water which is both costly and affects the environment. A connected such problem with the conventional wheel cleaning devices is that after the cleansing of the wheel, the contaminated water is discharged into a drainage system coupled to the wheel cleaning devices, and a more water is used during the rinse, more water also needs to be discarded. The contaminants in the discharged contaminated water often contain harmful elements that causes pollution, namely water pollution, to the environment.

Therefore, in light of the foregoing discussion, there exists a need to overcome the aforementioned drawbacks associated with the conventional wheel cleaning arrangement specifically to reduce the amount of water used.

### SUMMARY

The present disclosure seeks to overcome or at least mitigate the problems discussed above by providing a fluid retrieval arrangement configured to be used in a wheel washing arrangement, the wheel washing arrangement comprising a water compartment configured to hold used fluids, wherein the fluid retrieval arrangement comprises a pressurized gas inlet configured to be connected to a pressurized gas source, a hollow body, a dip tube arranged to extend, and when in use downwards, into the hollow body, a water outlet connected to the dip tube and configured to be connected to a conduit to feed used fluids to a spray device, a water inlet, and a one-way valve arranged to enable a closing or opening of the water inlet, whereby the water inlet is configured to enable used fluids to enter from the water compartment into the hollow body when the one-way valve is open, and wherein the pressurized gas inlet is configured to receive pressurized gas thereby forcing the used fluids in the hollow body to exit the hollow body through the dip tube and thereby be transported to the spray device of the wheel washing arrangement.

In some embodiments the fluid retrieval arrangement is configured to be at least partially submerged in the used fluids of the water compartment when in use.

In some embodiments the one-way valve is a ball that is arranged to be free-moving in the hollow body. In some embodiments a diameter of the one-way valve is larger than a diameter of the water inlet.

In some embodiments the water inlet is arranged at a bottom of the hollow body. In some embodiments the pressurized gas inlet is arranged at an upper - when in use - end of the hollow body. In some embodiments the water outlet is arranged at an upper - when in use - end of the hollow body.

According to some aspects there is provided a wheel washing arrangement comprising a water compartment, a pump, a spray device and at least one fluid retrieval arrangement according to the teachings herein.

In some embodiments the wheel washing arrangement further comprises or is configured to be connected to a control unit configured to control the operation of the at least one fluid retrieval arrangement.

In some embodiments the at least one fluid retrieval arrangement comprises a first fluid retrieval arrangement and a second fluid retrieval arrangement being connected in series.

According to some aspects there is provided a wheel washing system comprising a wheel washing arrangement according to the teachings herein.

According to some aspects there is provided a method for rinsing a wheel, the method comprising: retrieving used fluids through a fluid retrieval arrangement, performing a (first) rinse by spraying the retrieved fluids, and subsequently performing a (main) rinse using clean fluids.

Additional aspects, advantages, features and objects of the present disclosure would be made apparent from the drawings and the detailed description of the illustrative embodiments construed in conjunction with the appended claims that follow. It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
Figure 1A is a schematic illustration of a wheel washing system, in accordance with some embodiments of the present disclosure;
Figure 1B is a schematic illustration of an alternative wheel washing system, in accordance with some embodiments of the present disclosure;
Figure 2 is a schematic illustration of the wheel washing system of figure 1A, in accordance with some embodiments of the present disclosure;
Figure 3 is a schematic illustration of a wheel washing system (such as wheel washing system of figures 1A and 2), in accordance with some embodiments of the present disclosure;
Figure 4 is an illustration of a method for cleaning and rinsing a wheel, in accordance with some embodiments of the present disclosure;
Figures 5A to 5D shows a series of schematic illustrations of a wheel washing arrangement 102 as in figures 1A, 2 and 3 (also applicable to the wheel washing arrangement 102 as in figure 1B), in accordance with some embodiments of the present disclosure;
Figures 6A to 6B shows a series of schematic illustrations of a fluid retrieval arrangement to be used in a wheel washing system (such as wheel washing system of Figures 1A, 2, 3 and 5A to 5D (also applicable to the wheel washing arrangement 102 as in figure 1B)), in accordance with some embodiments of the present disclosure; and
Figure 7 shows a schematic illustration of a series of fluid retrieval arrangements (such as in Figures 6A to 6B) to be used in a wheel washing system (such as wheel washing system of Figures 1A, 1B, 2, 3 and 5A to 5D(also applicable to the wheel washing arrangement 102 as in figure 1B)), in accordance with some embodiments of the present disclosure.

### DETAILED DESCRIPTION OF THE DRAWINGS

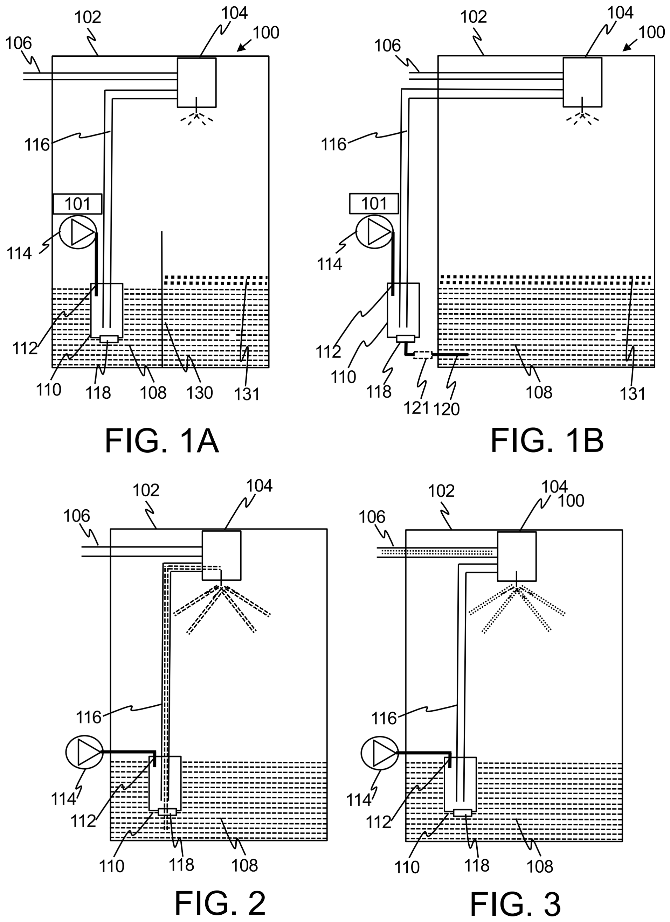

Referring to figure 1A, there is shown a schematic illustration of a wheel washing system 100, in accordance with some embodiments of the present disclosure. As shown, the wheel washing system 100 includes a wheel washing arrangement 102 for cleaning wheels of vehicles, and optionally a water treating arrangement (not shown). The wheel washing arrangement 102 includes one or more spray device(s) 104 (such as water sprinkler) for spraying cleaning fluids, such as water, water with cleaning agents and/or water with granules, onto a wheel of a vehicle. The wheel washing arrangement 102 includes or is interconnected to a water compartment 108, where the sprayed cleaning fluids - along with dirt and other materials washed of the wheels - can gather for disposal, further transport to a water treating arrangement (if present) and/or for recovering granules if such are used.

As mentioned in the background section, after a wheel has been washed it is still covered with dirt and other particles and not ready to leave the wheel washing arrangement 102. Therefore, traditionally a rinse with clean water is made in order to spray of all the loose dirt and residual plastic granules that are still on the wheel. However, this uses a lot of clean water which is both costly and affects the environment.

The inventors have realized that since the dirt and residual plastic granules (and other particles) that are left on the wheel is loose and (hopefully) not stuck to the wheel, most of them can be removed utilizing dirty water, and by performing a (first) rinse using retrieved or recycled (dirty) water, the amount of clean water needed can be greatly reduced, as the (main) rinse using clean water, can be much shorter. It should be noted that the terminology of a "first rinse" is not to state that the rinse is before the washing, but that the first rinse is before the rinse with clean water.

The inventors are therefore proposing to arrange the wheel washing arrangement 102, as is shown, with a fluid retrieval arrangement 110 which retrieves (dirty) fluids from the water compartment 108 through an inlet 118 and feeds the retrieved fluids back to the spray device(s) 104 through a (series of) water conduit(s) 116. The fluid retrieval arrangement 110 is coupled to (or comprise) a pressurized gas source, such as a gas tank or a pump device 114 which causes the retrieved fluids to be fed to the spray device(s) 104. The examples herein will be given with regards to a pneumatic pump as an example of a pressurized gas source, but it should be noted that the teachings also apply to other pressurized gas sources, such as a tank.

This enables the wheel washing arrangement 102 to perform a first rinse of the wheel(s) using retrieved fluids, which significantly reduces the use of clean water.

In figure 1A, the fluid retrieval arrangement 110 is arranged inside a water compartment (whether internal to the wheel washing arrangement or interconnected thereto) and arranged so that the water inlet 118 is submerged in the water - when in use. The fluid retrieval arrangement 110 is thus at least partially submerged in the water - when in use.

Figure 1B shows some alternative embodiments for a wheel washing arrangement 102 where the fluid retrieval arrangement 110 is arranged outside the water compartment (whether internal to the wheel washing arrangement or interconnected thereto). In such embodiments the water inlet 118 is in fluid connection with the water - when in use - in the water compartment 108. By being "in fluid connection" it is meant that fluid can travel between the water compartment and the water inlet 118. In some embodiments the fluid connection is achieved through a water conduit 120 that is arranged to open into the water - when in use - of the water compartment and lead water to the fluid retrieval arrangement 110.

Similarly to placing the fluid retrieval arrangement 110 outside the water compartment, the fluid retrieval arrangement 110 can be arranged at any level with regards to the water compartment (both when inside or outside the water compartment), and then using an optional pump 121 to pump the water from the water compartment to the fluid retrieval arrangement 110, wherein the water inlet could also be arranged at any level of the fluid retrieval arrangement 110. The water inlet 118 is, in such embodiments, thus in fluid communication with the water compartment 108 through that pump 121 and a conduit 120.

There is thus provided a fluid retrieval arrangement 110 configured to be used in a wheel washing arrangement 102, the wheel washing arrangement 102 comprising a water compartment 108 configured to hold used fluids, wherein the fluid retrieval arrangement 110 comprises an pressurized gas inlet 112A configured to be connected to a pressurized gas source 114, a hollow body 111, a dip tube 116A arranged to extend, and when in use downwards, into the hollow body 111, a water outlet 116B connected to the dip tube 116A and configured to be connected to a conduit to feed used fluids to a spray device 104, a water inlet 118, and a one-way valve 119 arranged to enable a closing or opening of the water inlet 118, whereby the water inlet 118 is configured to enable used fluids to enter from the water compartment 108 into the hollow body 111 when the one-way valve 119 is open, and wherein the pressurized gas inlet 112A is configured to receive pressurized air thereby forcing the used fluids in the hollow body 111 to exit the hollow body 111 through the dip tube 116A and thereby be transported to the spray device 104 of the wheel washing arrangement 102.

It should be noted that reference to pressurized gas will sometimes be made by referring to pressurized air or simply air, as air will be the most likely gas to use.

Figure 2 shows some embodiments of a wheel washing arrangement 102 as in figure 1A, but also applies to the wheel washing arrangement 102 as in figure 1B. However, in figure 2, the optional water treatment arrangement 120 has been left out to focus on the wheel washing arrangement 102 and its operation. Figure 2 shows how the wheel washing arrangement 102 is arranged to retrieve dirty cleaning fluids, such as water, from the water compartment and spray it through the spraying device in order to perform a first rinse. Figure 3, showing some embodiments of the wheel washing arrangement 102 in figure 2, where after the first rinse has been made, a clean water (or optionally filtered water if available) rinse is effected. As is illustrated, in figure 2 dirty water is retrieved via the fluid retrieval arrangement 110 and fed through the (series of) water conduit(s) 116 to the spray device 104 and sprayed, whereas in figure 3 clean water is retrieved through the water feed 106 and sprayed by the spray device 104. In figures 2 and 3, the thickness of the dashed lines indicates whether the water is clean (figure 3) or dirty (figure 2). As mentioned above, there may be more than one spray device, and in some embodiments, the first rinse is connected to one or more first spray devices and the primary rinse is connected to one or more primary rinse spray devices. In some embodiments, the first rinse is connected to one or more first spray devices, the primary rinse or wash is connected to one or more primary rinse spray devices, and the main wash is connected to one or more main wash spray devices.

In some embodiments the one or more spray devices may be arranged for alternative uses. In some such embodiments one or more of the one or more spray devices may also serve to alternately spray fluids and alternately spray gas (such as air) for removing dirt, granules or water droplets.

In some embodiments, one or more of the one or more spray devices are arranged to spray in other directions than directly at the wheel, for example to rinse a hatch of the washing compartment to prevent plastic granules form escaping the washing compartment when the hatch is opened.

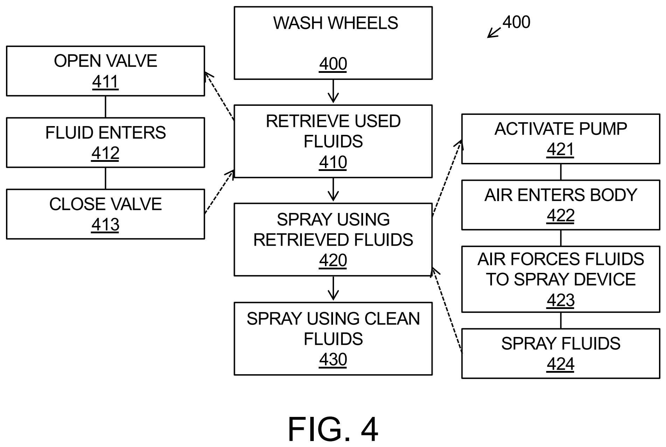

Referring to figure 4, there is shown a method 400 for (washing and) rinsing a wheel, in accordance with some embodiments of the present disclosure. After the wheel has been washed 400, used (dirty) water is recycled by being retrieved 410, such as through a fluid retrieval arrangement 110, and a first rinse is made 420 by spraying the retrieved fluids. Subsequently the main (or primary) rinse 430 is made using clean (and/or filtered) water.

In some embodiments the first rinse is up to 10 seconds, or up to 20 seconds, for example 2 to 5 seconds. In some embodiments the first rinse uses for example 0,1 - 5 litres, or for example 1-2 litres of retrieved water.

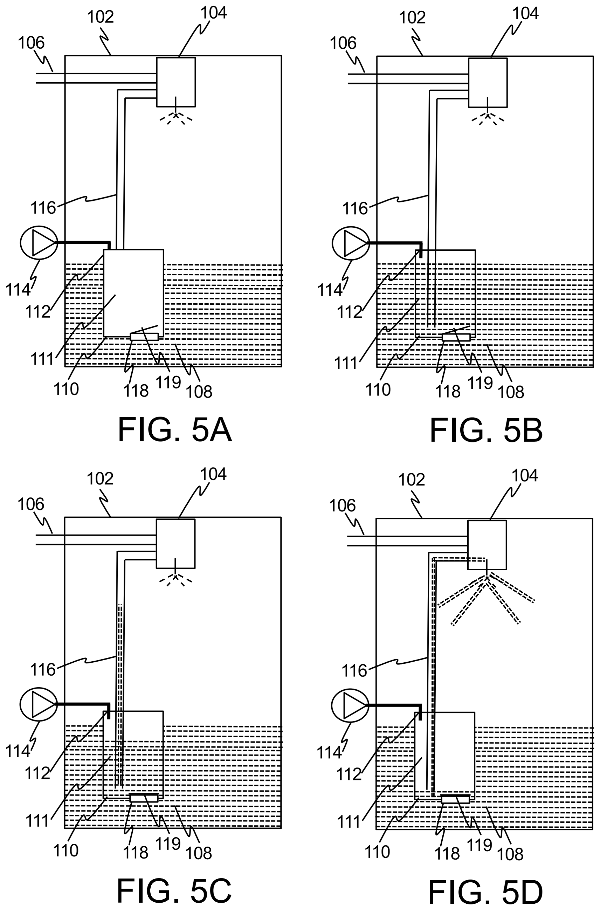

Returning to the wheel cleaning arrangement 102 more details of the fluid retrieval arrangement 110 will now be discussed with reference to figures 5A to 5D showing a wheel washing arrangement 102 as in figures 1A, 2 and 3, but also applies to the wheel washing arrangement 102 as in figure 1B, where the fluid retrieval arrangement 110 has been enlarged to better show features thereof. Starting with figure 5A, the fluid retrieval arrangement 110 is at least partially submerged in the water (no difference will be made between fluids and waters in the discussion on features of the fluid retrieval arrangement 110 as a skilled person would understand that the teachings herein apply equally to all cleaning fluids used) of the water compartment 108 and comprises an inlet 118. The inlet 118 is arranged at a lower end of the fluid retrieval arrangement 110, where lower is seen in the direction of gravity. The inlet 118 is also arranged with (or comprises) a one-way valve 119. The valve 119 may, in some embodiments, be passive for example membrane-based, such as a check-valve or a duckbill valve (or a ball as will be discussed further on). The valve 119 may, in some embodiments, be active, and controlled in unison with the pump device 114.

In some embodiments, the inlet 118 is arranged on an underside of the fluid retrieval arrangement 110, as in figure 5A. In some embodiments, the inlet 118 is arranged on a side of the hollow body 110 and at a lower portion of the of the fluid retrieval arrangement 110, as in figure 5A. As a skilled person would understand, the lower the inlet 118 is arranged, the higher the water pressure is for pushing or forcing the water into the hollow body. The further down the inlet is placed, the faster the hollow body 111 will fill. However, a low placement, such as on an underside, will also add to the height of the fluid retrieval arrangement 110. The width (or other measurement of the area) of the opening of the water inlet 118 (and the valve 119) is also decisive for how quickly the hollow body 111 fills, whereas a big inlet will be more complicated to properly shut and open with the valve 119.

As the water inlet 118 along with the fluid retrieval arrangement 110 is (at least partially) submerged in the water, the valve will open by the water pressure (when passive and be controlled to open when active) and allow water to enter a hollow body 111 of the fluid retrieval arrangement 110. The same applies when the water inlet 118 is in fluid connection with the water compartment. Figure 5A shows how the valve 119 is open and figure 5B shows how water has (at least partially) filled the hollow body 111 of the fluid retrieval arrangement 110. As a skilled person would understand, the water will fill the hollow body to the same amount as the fluid retrieval arrangement 110 is submerged.

As the first rinse is to be made after the washing, there is time available for filling the hollow body 111.

As the hollow body 111 has filled, or when it is time for the first rinse, the pump device 114 is activated to force the water in the hollow body 111 up through the conduit 116.

In some embodiments, the pressurized gas source 114 is a pneumatic pump (or high-pressure air pump) arranged to push pressurized air (or other gas) through a air conduit 112 into the hollow body 111.

In some embodiments, the pressurized gas source 114 is a tank for holding pressurized gas, wherein the tank acts as a pressurized gas source, same as a pneumatic pump would do, and is arranged to push pressurized air (or other gas) through a pressurized gas conduit 112 into the hollow body 111.

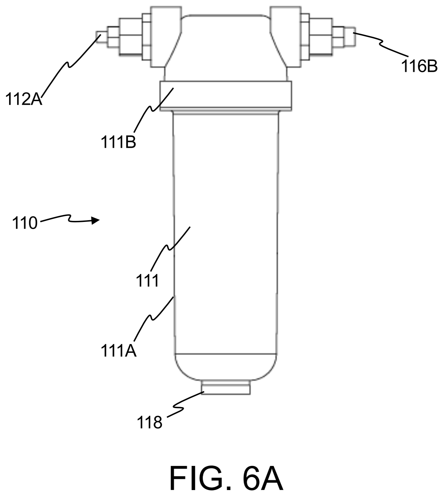

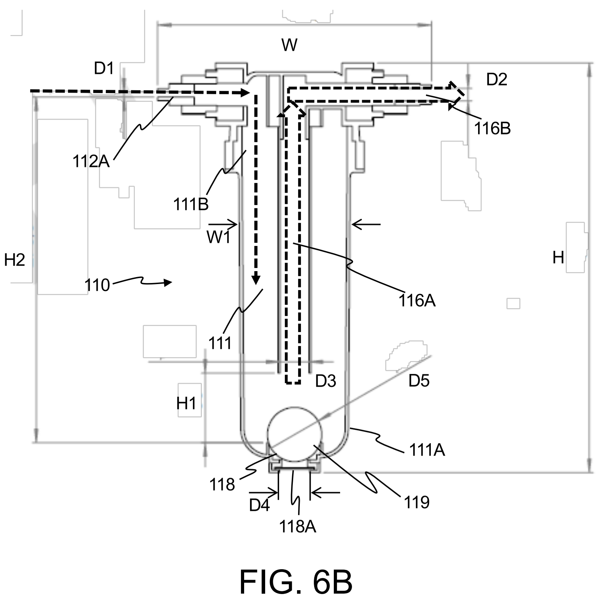

The pressurized gas conduit 112 is, in some embodiments, arranged at an upper end of the fluid retrieval arrangement 110, such as coming in from the top or a lid (shown in figure 6) of the fluid retrieval arrangement 110. In some embodiments, the pressurized gas conduit 112 is arranged at a side of the fluid retrieval arrangement 110, such as coming in from a side wall (or even an underside) of the hollow body 111 of the fluid retrieval arrangement 110.

As the pressurized air is pushed into the hollow body 111, the pressure therein builds up causing the valve 119 to close (or the valve is closed as the pump 114 is activated) and the water in the hollow body 111 is pushed up through the water conduit 116 to the spray device 104. As illustrated in the figures, the water conduit 116 is arranged to extend into the hollow body 111. The longer the water conduit 116 extends into the hollow body 111, the more of the water can be forced into the conduit. As the water level inside the hollow body 111 comes below the lower end of the water conduit 116, air will seep into the water conduit, and no more (or little) water will be pushed through the water conduit 116. Figure 5C shows how the pressurized air or other gas is pushed into the hollow body 111 causing the valve 119 to close, the water level in the hollow body 111 to go down and water being pushed up through the water conduit 116. Figure 5D shows how the pressurized air keeps pushing the water out of the hollow body 111 and the water level in the hollow body 111 going down further. As the pump 114 stops at the end of the first rinse, the valve 119 will open again (from the water pressure outside or through active opening synchronized with the pump) and water will again enter through the inlet 118, as in figure 5A.

Returning to figure 1A, in some embodiments where there is a divider 130 for keeping granules 131 collected in a granule portion of the water compartment (or in a compartment interconnected with the water compartment 108) the fluid retrieval arrangement 110 is (partially) submerged outside the divider, i.e. on the side where the granules are not collected. The use of the divider 130 enables for allowing a larger body of water to be used for cleaning (a larger body of water allows for handling more dirt as more dirt can be dissolved). Placing the fluid retrieval arrangement 110 outside the divider is beneficial to minimizing the risk of granules to accidentally enter the rinse unit or clog any connection. It eases also serviceability.

Figures 6A to 6B shows various views of an example of a fluid retrieval arrangement 110 configured to be used in a wheel washing system 100 and wheel washing arrangement 102 as in figures 1A, 1B, 2, 3, 4 and 5A to 5D according to some embodiments of the teachings herein. Figure 6A shows a sideview of a fluid retrieval arrangement 110 where there is a main body 111A and a lid 111B which, when assembled, forms the hollow body 111. The lid 111B may be configured to be screwed to the main body 111A or attached in another way such as using clamps (not shown). There are many alternatives and variations of how to fasten the lid 111B to the main body 111A as a skilled person would understand. The lid 111B is arranged with a pressurized gas inlet 112A for attaching an pressurized gas conduit from a pneumatic pump (not shown but referenced 114 in other figures). The pump 114 may be part of the fluid retrieval arrangement 110 (as in comprised in) or to be attached to it. The lid 111B also has a water outlet 116B for attaching further water conduits 116 for transporting water (or other fluids) to the spray device 104. The lid 111B is configured to attach to the main body 111A at an upper part of the fluid retrieval arrangement 110.

At the bottom of the main body 111A there is a water inlet 118 for receiving water into the hollow body 111, as the fluid retrieval arrangement 110 is (at least partially) submerged into water in a water compartment of a wheel washing arrangement.

The main body 111A is of a cylindrical form, where the bottom portion is shaped as a hemispherical tank end or dished end. In this example embodiment, the water inlet 118 is at the very bottom of the dished end.

Figure 6B shows the same example fluid retrieval arrangement 110 as in figure 6A, but here the inner components are also shown with dashed lines. Figure 6B shows how the water outlet 116B is connected to a water tube 116A, both seen as part of the water conduit referenced 116 in previous figures. The water tube 116A may also be referred to as a pickup tube or a dip tube, extending close to the bottom of the hollow body 111. In this example fluid retrieval arrangement 110 the valve 119 comprises a ball. The ball is arranged to be free-moving in the hollow body thereby being able to move away from the water inlet 118 as water is being pushed in by the water pressure, and then sink back down over the hole of the water inlet 118 as the water pressure inside the hollow body equalizes (or gets closer to) the water pressure outside the hollow body 111. The ball has a diameter that is larger than the diameter of the opening of the water inlet 118. The ball valve 119 has a density only slightly higher than the water, allowing the water pressure (of the water in the water compartment) to push the ball valve up 119 to enable for an opening of the valve when the fluid retrieval arrangement 110, and more importantly the water inlet 118, is submerged in the water. The higher density of the ball valve 119 allows it to sink towards the bottom as the hollow body has been (at least partially) filled, closing the valve.

In some embodiments the ball valve 119 is made of rubber or plastic materials. The ball valve 119 may also be made of wood, ceramic, metal or mineral materials.

In some embodiments the ball valve 119 has a density that is 5%, 10%, 15% or 20% higher than the water or rather fluid to be retrieved. Note that here it is important to note that it may not only be water that is being retrieved, but a washing solution or fluid whose density may differ from pure water.

In some embodiments, the water inlet 118 comprises a filter 118A to filter out dirt particles and prevent such from entering the hollow body 111, thereby providing a simple and fast pre-filtering, which does not add time to the overall process as there is plenty of time for the hollow body to fill with water.

Figure B also shows single-line dashed arrows indicating the flow of pressurized air as the pump forces pressurized air into the fluid retrieval arrangement 110 to force the water assembled in the hollow body 111 to be pushed up through the dip tube 116A, out of the water outlet 116B and pushed further through the (series of) conduit(s) 116 to the spray device 104. Double-line dashed arrows indicate the flow of water.

Returning to figure 4, further details as regards retrieving the fluids are also shown, where the valve 119 is allowed 411 to be opened (possibly controlled to be so in case of an active valve, or by simply turning off the pump 114 for a passive valve 119), whereby water (or other fluids) is allowed to enter 412 the hollow body from a water compartment (108) that the fluid retrieval arrangement 110 is (at least partially) submerged in. As the hollow body 111 fills, the valve 119 will again be allowed (or controlled) to be closed 413. The spraying of the retrieved fluid is effected by activating 421 the (pneumatic) pump causing pressurized air to enter 422 the hollow body 111 and force 423 the retrieved water up through the water conduit(s) 116 to the spray device 104, where it is sprayed 424 onto the wheel for rinsing the wheel with retrieved water. As noted before, there is made no difference in the text between water and other cleaning fluids, water being a representative of such other cleaning fluids.

Returning to figures 6A and 6B, the fluid retrieval arrangement 110 of this particular example is shown with some measurements for which examples will be given. It should be noted that this is only one example, and other ranges, and sizes for the measurements may apply.

In some embodiments, the pressurized gas inlet 112A has a diameter D1 of 4 mm and may be made of a standard pneumatic connection. In some embodiments the diameter D1 is in any of the ranges 3-5, 4-8, or 5-10 mm.

In some embodiments, the water outlet 116B has a diameter D2 of 10 mm and may be made of a standard water/fluid connection. In some embodiments the diameter D2 is in any of the ranges 8-12, 6-14, or 8-18 mm.

In some embodiments, the water dip tube 116A has a diameter D3 of 23 mm. In some embodiments the diameter D3 is in any of the ranges 20-25, 18-30, 15-30 or 5-15 mm. The diameter D3 used will depend on the components, for example the diameter of the water outlet 116. In some embodiments the diameter D3 is substantially the same (+/- 1 mm) as the diameter D2.

In some embodiments, the water inlet 118 has a diameter D4 of 20 mm and may be made of a standard water/fluid connection. In some embodiments the diameter D4 is in any of the ranges 20-25, 18-25, or 15-30 mms.

In some embodiments, the ball valve 119 has a diameter D5 larger than D4, and in this example the diameter D5 is 43 mm. In some embodiments the diameter D5 is in any of the ranges 25-30, 20-50, or 25-45 mms.

In some embodiments, the overall-height H of the fluid retrieval arrangement 110 is 324 mm. In some embodiments the height H is in any of the ranges 300-350, 250-400, or 200-450 mms.

In some embodiments, the overall width W of the fluid retrieval arrangement 110 is 216 mm. In some embodiments the width W is in any of the ranges 210-200, 200-240, or 200-250 mms.

In some embodiments, the dip tube 116A is arranged to extend to a height H1 over the water inlet 118, where the height H1 is 55 mm. In some embodiments the height H1 is in any of the ranges 50-60 mm, 40-55 mm, or 30-55 mm. In case a ball valve 119 is used, the height H1 needs to be more than the diameter D5 of the ball valve 119.

In some embodiments, the effective height H2 (between inlet 112 and water inlet 118) of the fluid retrieval arrangement 110 is 275 mm. In some embodiments the height H2 is in any of the ranges 260-290, 250-300, or 200-280 mms.

In some embodiments, the extension height H1 may be defined in relation to the effective height H2, and in such cases the ratio is 20% or in any of the ranges 18%-22%, 15%-25%, 10%-25% or 10%-30%.

As the body 111 of the fluid retrieval arrangement 110 is to be (partially) submerged there is a practical limit to the height of the fluid retrieval arrangement 110. Also, if the body 111 is too wide, the ball may not find its way to the cradle formed by the inlet 118. The size of the hollow body is thus limited by practical constraints. Therefore, in order to increase the volume of retrieved water, two or more fluid retrieval arrangement 110 may be connected in series, where the pressurized gas inlet 112 may be replaced by a water outlet 116B for enabling a connection between a first fluid retrieval arrangement 110 and a second fluid retrieval arrangement 110 so that as pressurized gas enters the first fluid retrieval arrangement 110, the water is forced up through the dip tube, out through the water outlet, and into the (pressurized gas) inlet 112 of the second fluid retrieval arrangement 110 forcing the water therein out through the dip tube 116A of the second fluid retrieval arrangement 110, and so on if more fluid retrieval arrangement 110 are connected.

Alternatively, in order to increase the volume of retrieved water, two or more fluid retrieval arrangement 110 may be connected in parallel.

And, alternatively, in order to increase the volume of retrieved water, two or more fluid retrieval arrangements 110 may be connected in parallel and two or more fluid retrieval arrangement 110 may be connected in series.

It should be noted that even though the pressurized gas inlet 112A and the water outlet 116B are shown as extending in a horizontal direction (orthogonal to the direction of the dip tube), they may in some embodiments, one of them or both, be arranged so that they extend in any direction, for example in the same direction as the dip tube 116A. In some such embodiments, the water outlet 116B may be comprised in the dip tube 116A.

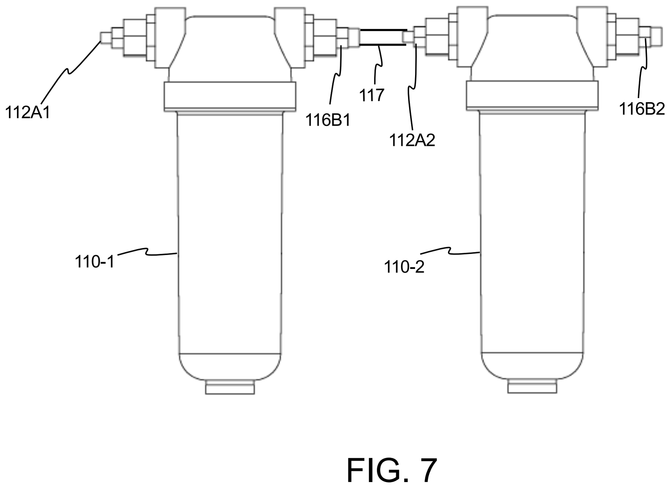

Figure 7 shows how two fluid retrieval arrangements 110-1, 110-2 can be connected in series, where the water outlet 116B-1 of the first fluid retrieval arrangement 110-1 is connected to the pressurized gas inlet 112A-2 of the second fluid retrieval arrangement 110-2, possibly through a connector 117. Using a connector 117 allows for connecting the pressurized gas inlet 112A and the water outlet 116B even if they are of different dimensions and connection standards. This allows for connecting standard components implementing the fluid retrieval arrangement 110. Not shown in figure 7 is the pneumatic pump 114 which is connected to the first of the fluid retrieval arrangements 110.

As an alternative to using a connector, the water inlet and the gas inlet may be arranged to be of the same dimensions for easy connection, possibly using a same type of inlet.

Returning to figure 4 and applying the method 400 to the fluid retrieval arrangements 110 being connected in series, it should be noted that the retrieving 410 of the fluids is done in series for all the fluid retrieval arrangements 110. However, as the pressurized air will act very quickly it is almost done simultaneously. As the air in between the hollow bodies 111 is not pressurized, it will not act in any significant manner as a resistance to the flow, and there will be no or very little disruption in the flow of water through the spray device 104.

Returning to figure 1A, the wheel washing system 100 may comprise a control unit 101 for controlling the operation of the wheel washing system 100. The control unit 101 may be a single control unit controlling all components of the wheel washing system 100, or several control units - all seen to be comprised in the common control unit 101 - for controlling one or more of the components of the wheel washing system 100. Such a control unit 101 may be made in many different manners, but in general it comprise a processor module, for example a CPU (Central Processing Unit) or PLC (Programmable Logic Unit), and a memory module for storing computer-readable instructions that when loaded into and executed by the processor module enables for controlling the operation of the wheel washing system 100, and specifically the pressurized gas source 114 (and possibly the valve 119 if an active valve) for controlling the operation of the fluid retrieval arrangement 110. The control unit 101 (or a partial control module 101) may thus be arranged in or connected to the pressurized gas source 114. Such control unit 101 may control some or all actions, functions and features discussed herein.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A fluid retrieval arrangement (110) configured to be used in a wheel washing arrangement (102), the wheel washing arrangement (102) comprising or being connected to a water compartment (108) configured to hold used fluids, wherein the fluid retrieval arrangement (110) comprises
a pressurized gas inlet (112A) configured to be connected to a pressurized gas source (114),
a hollow body (111),
a dip tube (116A) arranged to extend, and when in use downwards, into the hollow body (111),
a water outlet (116B) connected to the dip tube (116A) and configured to be connected to a conduit to feed used fluids to a spray device (104),
a water inlet (118) in fluid communication with the water compartment, and
a one-way valve (119) arranged to enable a closing or opening of the water inlet (118),
whereby
the water inlet (118) is configured to enable used fluids to enter from the water compartment (108) into the hollow body (111) when the one-way valve (119) is open, and wherein
the pressurized gas inlet (112A) is configured to receive pressurized gas thereby forcing the used fluids in the hollow body (111) to exit the hollow body (111) through the dip tube (116A) and thereby be transported to the spray device (104) of the wheel washing arrangement (102).

2. The fluid retrieval arrangement (110) according to claim 1, wherein the water inlet (118) is in fluid communication with the water compartment (108) by the fluid retrieval arrangement (110) being configured to be at least partially submerged in the used fluids of the water compartment (108) when in use.

3. The fluid retrieval arrangement (110) according to claim 1, wherein the water inlet (118) is in fluid communication with the water compartment through a water conduit (120), and optionally a pump (121).

4. The fluid retrieval arrangement (110) according to any of claims 1 to 3, wherein the one-way valve (119) is membrane-based or wherein the one-way valve (119) is a ball that is arranged to be free-moving in the hollow body (111)and a diameter of the ball (119) is larger than a diameter of the water inlet (118).

5. The fluid retrieval arrangement (110) according to any preceding claim, wherein the lower end - when in use - of the hollow body (111) is shaped as a dished end.

6. The fluid retrieval arrangement (110) according to any preceding claim, wherein the water inlet (118) arranged at a lower end of the hollow body (111), optionally.
at a bottom of the hollow body (111).

7. The fluid retrieval arrangement (110) according to any preceding claim, wherein the pressurized gas inlet (112A) is arranged at an upper - when in use - end of the hollow body (111) and wherein the water outlet (116B) is arranged at an upper - when in use - end of the hollow body (111), wherein the fluid retrieval arrangement (110) optionally further comprises a lid (111B) and a main body (111A) that when joined forms the hollow body (111), and wherein the pressurized gas inlet (112A) and the water outlet (116B) are arranged in the lid (111B) and wherein the water inlet (118) is arranged at a lower - when in use - end of the main body (111A).

8. A wheel washing arrangement (102) comprising a water compartment (108), a pressurized gas source (114), one or more spray device(s) (104) and at least one fluid retrieval arrangement (110) according to any preceding claim, wherein the pressurized gas source (114) is a pneumatic pump, wherein the wheel washing arrangement (102) further comprises or is configured to be connected to a control unit (101) configured to control the operation of the at least one fluid retrieval arrangement (110).

9. The wheel washing arrangement (102) according to claim 8, wherein the at least one fluid retrieval arrangement (110) comprises a first fluid retrieval arrangement (110-1) and a second fluid retrieval arrangement (110-2) being connected in series.

10. The wheel washing arrangement (102) according to claim 8 or 9, wherein the at least one fluid retrieval arrangement (110) comprises a first fluid retrieval arrangement (110-1) and a second fluid retrieval arrangement (110-2) being connected in parallel.

11. A wheel washing system (100) comprising a wheel washing arrangement (102) according to any of claims 8 to 10.

12. A method for rinsing a wheel, the method comprising:
retrieving (410) used fluids through a fluid retrieval arrangement (110),
performing a rinse (420) by spraying the retrieved fluids, and
subsequently performing a rinse (430) using clean fluids.

13. The method for rinsing a wheel according to claim 12, the method further comprising retrieving (410) used fluids by
allowing (411) a valve (119) in a water inlet (118) to open,
whereby fluid is allowed (412) to enter a hollow body (111) from a water compartment (108), and
allowing the valve (119) to close (413).

14. The method for rinsing a wheel according to claim 13, wherein the fluid retrieval arrangement 110 is (at least partially) submerged in the water compartment (108).

15. The method for rinsing a wheel according to claim 13 or 14, the method further comprising spraying the retrieved fluids by
activating (421) a pressurized gas source (114)
causing pressurized gas to enter (422) the hollow body 111 and
forcing (423) the retrieved fluids up through a water conduit (116) to a spray device (104),
whereby the retrieved fluids are sprayed (424) onto the wheel for rinsing the wheel with retrieved fluids.
